# EUROPEAN PATENT APPLICATION

(11) **EP 4 797 427 A1**
(43) Date of publication of application: **26.08.2026**
(21) Application number: 25869666.5
(22) Date of filing: 26.01.2025
(51) Int. Cl.: H01M 50/543, H01M 50/50, B23K 26/21

(54) **TERMINAL POST STRUCTURE, TERMINAL POST STRUCTURE PREPARATION METHOD, TOP COVER ASSEMBLY AND BATTERY**

(30) Priority: 21.10.2024 CN 202411471588
(71) Applicant: HUIZHOU EVE POWER CO., LTD, Huizhou, Guangdong 516039 (CN); Eve Power Co., Ltd., Jingmen, Hubei 448000 (CN)
(72) Inventor: AN, Suli, Huizhou, Guangdong 516039 (CN); SHU, Kuanjin, Huizhou, Guangdong 516039 (CN); DUAN, Dong, Huizhou, Guangdong 516039 (CN); LIU, Ziwen, Huizhou, Guangdong 516039 (CN); LIN, Zhibing, Huizhou, Guangdong 516039 (CN); HUANG, Jinhai, Huizhou, Guangdong 516039 (CN); ZHENG, Xu, Huizhou, Guangdong 516039 (CN)
(74) Representative: Zhu, Puxing
(86) International application number: PCT/CN2025/075325
(87) International publication number: WO 2026/086041

(57) **Abstract**

A pole post structure, a method for manufacturing the pole post structure, a top cover assembly, and a battery are provided by the present disclosure. The pole post structure includes a pole post and an electrode lead-out terminal. The pole post includes a first connection end and a second connection end opposite to each other. The first connection end is configured to be connected with a tab of the battery. The electrode lead-out terminal is welded to the second connecting end of the pole post. A welding region is formed at a connection between the electrode lead-out terminal and the pole post. The pole post includes a first welding portion located in the welding region. The electrode lead-out terminal includes a second welding portion located in the welding region. The first welding portion wraps at least a part of the second welding region; and/or the second welding portion wraps at least a part of the first welding region.

## Description

This application claims priority to and the benefit of Chinese Patent Application 202411471588.9, filed on October 21, 2024. The disclosure of which is incorporated herein by reference in its entirety.

### TECHNICAL FIELD

The present disclosure relates to the field of battery technologies, in particular to a pole post structure and a method for manufacturing the pole post structure, a top cover assembly, and a battery.

### BACKGROUND

In the related art, a cell of a battery is connected to one end of a pole post through a tab, and another end of the pole post is connected to an electrode lead-out terminal. The electrode lead-out terminal is connected to a busbar, thereby realizing series and parallel connections among a plurality of batteries.

### SUMMARY

However, since a connection strength between the pole post and the electrode lead-out terminal is insufficient, a connection between the pole post and the electrode lead-out terminal is prone to be broken.

A pole post structure is provided by the present disclosure. The pole post structure includes:
a pole post including a first connection end and a second connection end, where the first connection end is configured to be connected with a tab of a battery; and
an electrode lead-out terminal welded to the second connecting end of the pole post, where a connection between the electrode lead-out terminal and the pole post is formed with a welding region.

The pole post includes a first welding portion located in the welding region. The electrode lead-out terminal includes a second welding portion located in the welding region. The first welding portion wraps at least a part of the second welding portion, and/or the second welding portion wraps at least a part of the first welding portion.

A method for manufacturing the pole post structure is provided by the present disclosure. The method includes following steps:
providing a pole post, where the pole post includes a first connection end and a second connection end opposite to each other, and the first connection end is configured to be connected with a tab of a battery;
providing an electrode lead-out terminal; and
welding the electrode lead-out terminal to the second connection end of the pole post to form a welding region at a connection between the electrode lead-out terminal and the pole post, so that a first welding portion of the pole post located in the welding region wraps at least a part of a second welding portion of the electrode lead-out terminal located in the welding region, and/or the second welding portion of the electrode lead-out terminal located in the welding region wraps at least a part of the first welding portion of the pole post located in the welding region.

A top cover assembly is further provided by the present disclosure. The top cover assembly includes:
a top cover sheet including a mounting hole penetrating through the top cover sheet;
the above-described pole post structure or the pole post structure manufactured by the method for manufacturing the pole post structure, where the pole post of the pole post structure passes through the mounting hole, and the top cover sheet is located on one side of the electrode lead-out terminal of the pole post structure along a direction from the second connection end to the first connection end; and
an insulating sheet sandwiched between the electrode lead-out terminal and the top cover sheet.

A battery is further provided by the present disclosure. The battery includes the above-described top cover assembly.

### BENDFICIAL EFFECTS

In the pole post structure provided by the present disclosure, the welding region is formed at the connection between the electrode lead-out terminal and the second connection end of the pole post. The pole post includes a first welding portion located in the welding region. The electrode lead-out terminal includes a second welding portion located in the welding region. The first welding portion wraps at least a part of the second welding portion, or the second welding portion wraps at least a part of the first welding portion. As such, a connection strength between the first welding portion and the second welding portion can be improved, and a connection strength between the electrode lead-out terminal and the second connection end of the pole post is improved, thereby alleviating the technical problem that the connection between the pole post and the electrode lead-out terminal is prone to be broken due to an insufficient connection strength between the pole post and the electrode lead-out terminal of the pole post structure.

In the method for manufacturing the pole post structure provided by the present disclosure, the electrode lead-out terminal is welded to the second connection end of the pole post to form the welding region at the connection between the electrode lead-out terminal and the pole post, so that the first welding portion of the pole post located in the welding region wraps at least a part of the second welding portion of the electrode lead-out terminal located in the welding region, and/or the second welding portion of the electrode lead-out terminal located in the welding region wraps at least a part of the first welding portion of the pole post located in the welding region. As such, the connection strength between the first welding portion and the second welding portion can be improved, and the connection strength between the electrode lead-out terminal and the second connection end of the pole post is improved, thereby alleviating the technical problem that the connection between the pole post and the electrode lead-out terminal is prone to be broken due to the insufficient connection strength between the pole post and the electrode lead-out terminal of the pole post structure.

In the top cover assembly and the battery provided by the present disclosure, the first welding portion of the pole post structure wraps at least a part of the second welding portion, or the second welding portion wraps at least a part of the first welding portion. As such, the connection strength between the first welding portion and the second welding portion can be improved, and the connection stability between the tab of the battery and the electrode lead-out terminal is improved, so that the stability of the battery can be improved.

### BRIEF DESCRIPTION OF THE DRAWINGS

FIG. 1 is a cross-sectional view of an embodiment of a top cover assembly according to the embodiments of the present disclosure, in which a pole post and an electrode lead-out terminal are in an unwelded state.
FIG. 2 is a cross-sectional view of an embodiment of a top cover assembly according to the embodiments of the present disclosure, in which a pole post and an electrode lead-out terminal are in a welded state.
FIG. 3 is an enlarged view at a portion A in FIG. 2.
FIG. 4 is an enlarged view of a portion B in FIG. 3.
FIG. 5 is a cross-sectional view of an embodiment of a battery according to the embodiments of the present disclosure.
FIG. 6 is an electronic image of a cross-sectional view of an embodiment of a welding region formed by welding and fusing at a connection between an electrode lead-out terminal and a second connection end of a pole post according to the embodiments of the present disclosure.
FIG. 7 is a map of a total number of distribution maps of each element in the welding region in FIG. 6.
FIG. 8 is an element distribution map at each point on a line connecting point P and point Q in FIG. 6.
FIG. 9 is a total map of element distribution at each point on a line connecting point P and point Q in FIG. 6.
FIG. 10 is a flowchart of an embodiment of a method for manufacturing a pole post structure according to the embodiments of the present disclosure.
FIG. 11 is a schematic structural view of an embodiment of a laser welding spot according to the embodiments of the present disclosure.
FIG. 12 is a schematic structural diagram of an embodiment of a first spiral trajectory and a second spiral trajectory according to the embodiments of the present disclosure.
FIG. 13 is a schematic structural diagram of an embodiment in which a moving trajectory and a first annular trajectory are combined to form a first spiral trajectory according to the embodiments of the present disclosure.
FIG. 14 is a schematic structural diagram of an embodiment in which a moving trajectory and a second annular trajectory are combined to form a second spiral trajectory according to the embodiments of the present disclosure.
FIG. 15 is a schematic view of a welding region of a pole post structure according to the embodiments of the present disclosure.

Descriptions of reference numbers are as follows.
1, battery; 10, top cover assembly; 11, pole post structure; 111, pole post; 1111, first connection end; 1112, second connection end; 1113, first welding portion; 1114, first connection groove; 1115, second embedded portion; 1116, second embedded body; 1117, second branch; 112, electrode lead-out terminal; 1121, second welding portion; 1122, first embedded portion; 1123, first embedded body; 1124, first branch; 1125, second connection groove; 113, welding region; 12, top cover sheet; 121, mounting hole; 13, insulating sheet; 20, cell; 21, tab; 30, laser welding spot; 31, annular preheating spot; 32, annular fusion spot; 401, first spiral trajectory; 402, second spiral trajectory; 40, moving trajectory; 42, first annular trajectory; 43, second annular trajectory.

### DETAILED DESCRIPTION

In the description of the present disclosure, unless otherwise expressly specified and limited, the terms conjoint, connect, and fix are to be understood in a broad sense, for example, as a fixed connection, as a detachable connection, or as a one-piece connection; also as a mechanical connection or an electrical connection; or may be directly connected or indirectly connected by means of an intermediate medium; or may be internal communication of the two elements or interaction of the two elements. A person skilled in the art can understand the specific meaning of the above terms in the context of the present disclosure according to specific circumstances.

In the present disclosure, a structure in which a first feature is "on" or "beneath" a second feature may include an embodiment in which the first feature directly contacts the second feature, and may also include an embodiment in which an additional feature is formed between the first feature and the second feature so that the first feature does not directly contact the second feature, unless otherwise specified. Furthermore, that the first feature is on, above and over the second feature includes the first feature is directly above and diagonally above the second feature, or simply indicating that the first feature is horizontally higher than the second feature. That the first feature is below, under, and beneath the second feature includes the first feature is directly below and diagonally below the second feature, or simply indicating that the first feature is horizontally lower than the second feature.

In the description of the present disclosure, terms such as "above", "below", "left", "right", "front", "back" refer to the orientation or positional relationship shown in the appended drawings, and are only for the purpose of facilitating the description and simplifying of operation, rather than indicating or implying that the apparatus or component referred to must have a particular orientation or must be configured or operated in a particular orientation, therefore should not be construed as a limitation towards the present disclosure. In addition, the terms first and second are only used for descriptive purposes and have no special meaning.

A pole post structure, a top cover assembly, and a battery are provided by the embodiments of the present disclosure.

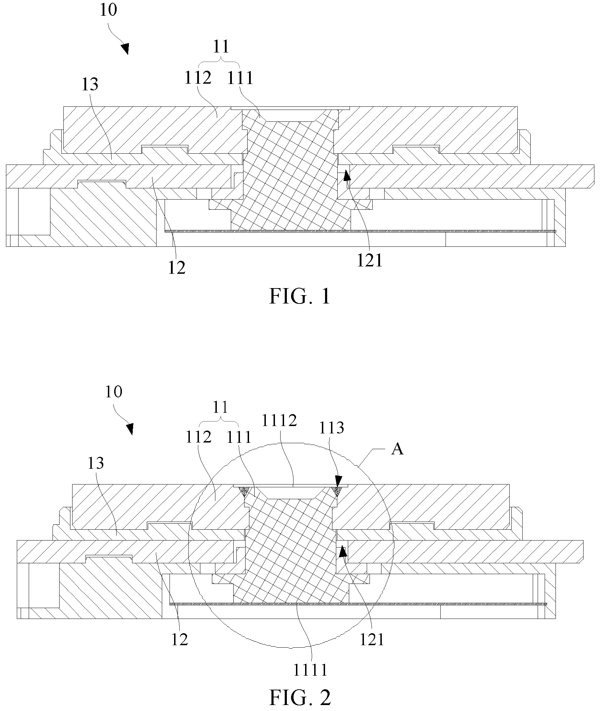

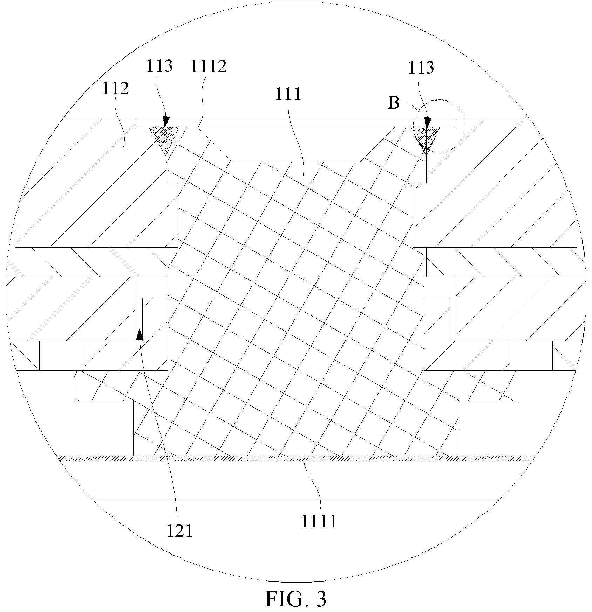

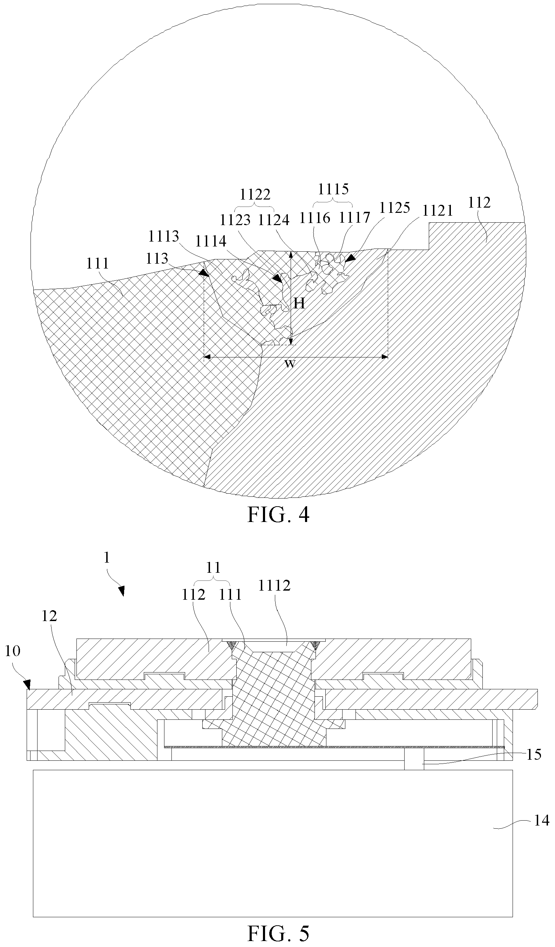

FIG. 1 is a cross-sectional view of an embodiment of a top cover assembly according to the embodiments of the present disclosure, in which a pole post and an electrode lead-out terminal are in an unwelded state. FIG. 2 is a cross-sectional view of an embodiment of a top cover assembly according to the embodiments of the present disclosure, in which a pole post and an electrode lead-out terminal are in a welded state. FIG. 3 is an enlarged view at a portion A in FIG. 2. FIG. 4 is an enlarged view of a portion B in FIG. 3. FIG. 5 is a cross-sectional view of an embodiment of a battery according to the embodiments of the present disclosure.

As shown in FIGs. 1, 2, and 5, a top cover assembly 10 includes a pole post structure 11. The pole post structure 11 includes a pole post 111 and an electrode lead-out terminal 112. The pole post 111 includes a first connection end 1111 and a second connection end 1112 opposite to each other. The first connection end 1111 of the pole post 111 is configured to be connected with a tab 21 of a battery 1. The electrode lead-out terminal 112 is connected with the second connection end 1112 of the pole post 111, so that a cell 20 of the battery 1 is electrically connected with the electrode lead-out terminal 112 through the tab 21 and the pole post 111. After the electrode lead-out terminal 112 is connected with a busbar, a plurality of batteries 1 can be connected in series or in parallel through the busbar.

The electrode lead-out terminal 112 may be welded to the second connection end 1112 of the pole post 111 to improve a connection strength between the electrode lead-out terminal 112 and the second connection end 1112 of the pole post 111, thereby improving the operation stability of the battery 1.

In some embodiments, as shown in FIGs. 3 and 4, in order to further improve the connection strength between the second connection end 1112 of the pole post 111 and the electrode lead-out terminal 112, a welding region 113 is formed at a connection between the electrode lead-out terminal 112 and the second connection end 1112 of the pole post 111. The pole post 111 includes a first welding portion 1113 located in the welding region 113. The electrode lead-out terminal 112 includes a second welding portion 1121 located in the welding region 113. The first welding portion 1113 wraps at least a part of the second welding portion 1121. As such, a connection strength between the first welding portion 1113 and the second welding portion 1121 can be improved, and the connection strength between the electrode lead-out terminal 112 and the second connection end 1112 of the pole post 111 is improved, thereby alleviating the technical problem that the connection between the pole post 111 and the electrode lead-out terminal 112 is prone to be broken due to an insufficient connection strength between the pole post 111 and the electrode lead-out terminal 112 of the pole post structure 11.

Certainly, the second welding portion 1121 may wraps at least a part of the first welding portion 1113, so that the connection strength between the first welding portion 1113 and the second welding portion 1121 is improved, and the connection strength between the electrode lead-out terminal 112 and the second connection end 1112 of the pole post 111 is improved, thereby alleviating the technical problem that the connection between the pole post 111 and the electrode lead-out terminal 112 is prone to be broken due to an insufficient connection strength between the pole post 111 and the electrode lead-out terminal 112 of the pole post structure 11.

It should be noted that in the embodiments of the present disclosure, only the first welding portion 1113 wraps at least a part of the second welding portion 1121, or only the second welding portion 1121 wraps at least a part of the first welding portion 1113. Alternatively, the second welding portion 1121 wraps at least a part of the first welding portion 1113, and the first welding portion 1113 wraps at least a part of the second welding portion 1121. Certainly, the latter can further improve the connection strength between the first welding portion 1113 and the second welding portion 1121, so that the connection strength between the second connection end 1112 of the pole post 111 and the electrode lead-out terminal 112 is improved.

In addition, the connection between the electrode lead-out terminal 112 and the second connection end 1112 of the pole post 111 is heated and melted by a welding method such as submerged arc welding or explosive welding, and then cooled and solidified to form the welding region 113. During the process of forming the welding region 113 at the connection between the second connection end 1112 of the pole post 111 and the electrode lead-out terminal 112, the first welding portion 1113 may be formed by fusing, deforming, and solidifying at least a part of the pole post 111 located in the welding region 113. Similarly, the second welding portion 1121 may be formed by fusing, deforming, and solidifying at least a part of the electrode lead-out terminal 112 located in the welding region 113.

In some embodiments, the first welding portion 1113 and the second welding portion 1121 may be embedded, diffused, and composited with each other, so that the first welding portion 1113 wraps at least a part of the second welding portion 1121, and/or the second welding portion 1121 wraps at least a part of the first welding portion 1113, thereby providing a stronger connection strength between the first welding portion 1113 and the second welding portion 1121. The first welding portion 1113 and the second welding portion 1121 may be embedded, diffused, and composited with each other, which means that a part of a material of the first welding portion 1113 is embedded into the second welding portion 1121, and/or a part of a material of the second welding portion 1121 is embedded into the first welding portion 1113. For example, the first welding portion 1113 and the second welding portion 1121 are two kinds of elements having different materials. A part of the metal element of the first welding portion 1113 is embedded into the second welding portion 1121, and the part of the metal element embedded into the second welding portion 1121 is remained connected with another part of the first welding portion 1113. A part of the metal element of the second welding portion 1121 is embedded into the first welding portion 1113, and the part of the metal element embedded into the first welding portion 1113 is remained connected with another part of the second welding portion 1121. As such, an irregular contact surface is formed at a boundary between the first welding portion 1113 and the second welding portion 1121. The irregular contact surface increases an embedding strength between the first welding portion 1113 and the second welding portion 1121, so that the first welding portion 1113 and the second welding portion 1121 are more firmly connected. It is worth mentioning that the two materials of the first welding portion 1113 and the second welding portion 1121 are independent of each other, and do not form a metal bond or an alloy, while a composite strength between the first welding portion 1113 and the second welding portion 1121 is increased by an embedded structure formed above.

In some embodiments, the connection between the electrode lead-out terminal 112 and the pole post 111 is heated to form a molten pool, and the welding region 113 is formed by solidification of the molten pool, so that the first welding portion 1113 and/or the second welding portion 1121 melts and flows to form a structure in which the first welding portion 1113 wraps at least a part of the second welding portion 1121, and/or a structure in which the second welding portion 1121 wraps at least a part of the first welding portion 1113.

The first welding portion 1113 and/or the second welding portion 1121 may be heated, or heated and pressed simultaneously, so that the first welding portion 1113 and the second welding portion 1121 can be rapidly diffused and recombined. Specifically, the first welding portion 1113 may be heated and melted, so that at least a part of the second welding portion 1121 may be melted at a high temperature of the first welding portion 1113. The first welding portion 1113 and the second welding portion 1121 may flow, so that the first welding portion 1113 and the second welding portion 1121 may be embedded, diffused, and composited with each other to form the welding region in which the first welding portion 1113 wraps at least a part of the second welding portion 1121. Alternatively, the second welding portion 1121 may be heated and melted, so that at least a part of the first welding portion 1113 may be melted at a high temperature of the second welding portion 1121. The first welding portion 1113 and the second welding portion 1121 may flow, so that the first welding portion 1113 and the second welding portion 1121 may be embedded, diffused, and composited with each other to form the welding region in which the second welding portion 1121 wraps at least a part of the first welding portion 1113.

In some embodiments, as shown in FIG. 1, the first welding portion 1113 may be formed with a first connection groove 1114. The second welding portion 1121 may include a first embedded portion 1122 embedded into the first connection groove 1114, so that the first welding portion 1113 wraps the first embedded portion 1122, i.e., the first welding portion 1113 wraps at least a part of the second welding portion 1121.

The first embedded portion 1122 of the second welding portion 1121 may include a second embedded body 1123 and a plurality of second branches 1124 protruding from the second embedded body 1123. As such, when the first embedded portion 1122 of the second welding portion 1121 is embedded into the first connection groove 1114 of the first welding portion 1113, the first embedded portion 1122 is prone to come out of the first connection groove 1114, which is beneficial to improving the connection strength between the first welding portion 1113 and the second welding portion 1121.

In some embodiments, a hardness of the pole post 111 is greater than a hardness of the electrode lead-out terminal 112, and/or a density of the pole post 111 is greater than a density of the electrode lead-out terminal 112, so that the structure in which the first welding portion 1113 wraps at least a part of the second welding portion 1121 is easier to be formed during the process of welding the second connection end 1112 of the pole post 111 to the electrode lead-out terminal 112.

Specifically, during a process of fusing the first welding portion 1113 and the second welding portion 1121 to form the molten pool, the first connecting groove 1114 of the first welding portion 1113 and the first embedded portion 1122 of the second welding portion 1121 can be formed by the flow of the first welding portion 1113 and the second welding portion 1121 in a fusion state, and the first embedded portion 1122 is embedded into the first connecting groove 1114.

It should be noted that the strength of the pole post 111 is greater than the strength of the electrode lead-out terminal 112, or the hardness of the pole post 111 is greater than the hardness of the electrode lead-out terminal 112. Alternatively, the strength of the pole post 111 is greater than the strength of the electrode lead-out terminal 112, and the hardness of the pole post 111 is greater than the hardness of the electrode lead-out terminal 112. Specifically, a material of the pole post 111 may be a metal, and the metal may include copper. The pole post 111 may be an integral structure to improve the strength and conductivity of the pole post 111. A material of the electrode lead-out terminal 112 is metal, and the metal may include aluminum, so that the strength of the pole post 111 is greater than the strength of the electrode lead-out terminal 112, and the hardness of the pole post 111 is greater than the hardness of the electrode lead-out terminal 112. The electrode lead-out terminal 112 may be an integral structure to improve the strength and conductivity of the electrode lead-out terminal 112. Certainly, the material of the pole post 111 may be aluminum or another metal, and the material of the electrode lead-out terminal 112 may be copper or another metal.

A part of the second connection end 1112 of the pole post 111 close to the electrode lead-out terminal 112 may be heated and melted by a welding method such as laser welding, submerged arc welding, explosive welding, etc., to form a fusion region. As a temperature of the fusion region increases, a temperature of the electrode lead-out terminal 112 close to the fusion region also increases and melts to form a fusion region. The fusion region of the pole post 111 and the fusion region of the electrode lead-out terminal 112 together form the molten pool. A part of the pole post 111 located in the molten pool and a part of the electrode lead-out terminal 112 located in the molten pool will flow. The first welding portion 1113 of the pole post 111 and the second welding portion 1121 of the electrode lead-out terminal 112 will be formed after the pole post 111 and the electrode lead-out terminal 112 are cooled and solidified in the molten pool. The first welding portion 1113 melted first is more prone to flow and wrap at least a part of the second welding portion 1121 in the fusion state. Then, after the first welding portion 1113 and the second welding portion 1121 are solidified, the structure in which the first welding portion 1113 wraps at least a part of the second welding portion 1121 can be formed.

In other embodiments, the second welding portion 1121 may be formed with a second connection groove 1125. At least a part of the first welding portion 1113 includes a second embedded portion 1115. The second embedded portion 1115 is embedded into the second connection groove 1125, so that the second welding portion 1121 wraps at least a part of the second embedded portion 1115, i.e., the second welding portion 1121 wraps at least a part of the first welding portion 1113.

The second embedded portion 1115 of the first welding portion 1113 may include a second embedded body 1116 and a plurality of second branches 1117 protruding from the second embedded body 1116. As such, when the second embedded portion 1115 of the first welding portion 1113 is embedded into the second connection groove 1125 of the second welding portion 1121, the second embedded portion 1115 is less prone to come out of the second connection groove 1125, which is beneficial to improving the connection strength between the first welding portion 1113 and the second welding portion 1121.

In some embodiments, the hardness of the pole post 111 is less than the hardness of the electrode lead-out terminal 112, and/or a density of the pole post 111 is less than a density of the electrode lead-out terminal 112, so that the structure in which the second welding portion 1121 wraps at least a part of the first welding portion 1113 is prone to be formed during the process of welding the second connection end 1112 of the pole post 111 to the electrode lead-out terminal 112.

Specifically, during the process of fusing the first welding portion 1113 and the second welding portion 1121 to form the molten pool, the second connecting groove 1125 of the second welding portion 1121 and the second embedded portion 1115 of the first welding portion 1113 can be formed by the flow of the first welding portion 1113 and the second welding portion 1121 in the fusion state, and the second embedded portion 1115 is embedded into the second connecting groove 1125.

It should be noted that the strength of the pole post 111 may be less than the strength of the electrode lead-out terminal 112, or the hardness of the pole post 111 may be less than the hardness of the electrode lead-out terminal 112. Alternatively, the strength of the pole post 111 may be less than the strength of the electrode lead-out terminal 112, and the hardness of the pole post 111 may be less than the hardness of the electrode lead-out terminal 112. Specifically, the material of the pole post 111 may include copper, and the material of the electrode lead-out terminal 112 may include aluminum, so that the strength of the pole post 111 is less than the strength of the electrode lead-out terminal 112, and the hardness of the pole post 111 is less than the hardness of the electrode lead-out terminal 112.

A part of the electrode lead-out terminal 112 close to the second connection end 1112 of the pole post 111 may be heated and melted by the welding method such as laser welding, submerged arc welding, explosive welding, etc., to form a fusion region. As a temperature of the fusion region increases, a temperature of the second connection end 1112 of the pole post 111 close to the fusion region also increases and melts to form a fusion region. The fusion region of the pole post 111 and the fusion region of the electrode lead-out terminal 112 together form the molten pool. A part of the pole post 111 located in the molten pool and a part of the electrode lead-out terminal 112 located in the molten pool will flow. The first welding portion 1113 of the pole post 111 and the second welding portion 1121 of the electrode lead-out terminal 112 will be formed after the pole post 111 and the electrode lead-out terminal 112 are cooled and solidified in the molten pool. The second welding portion 1121 melted first is more prone to flow and wrap at least a part of the first welding portion 1113 in a fusion state. Then, after the first welding portion 1113 and the second welding portion 1121 are solidified, the structure in which the second welding portion 1121 wraps at least a part of the first welding portion 1113 can be formed.

In some embodiments, a volume ratio of the first welding portion 1113 in the welding region 113 may be greater than or equal to 20%, and a volume ratio of the second welding portion 1121 in the welding region 113 may be greater than or equal to 30%, so that after the first welding portion 1113 wraps at least a part of the second welding portion 1121, the connection strength between the first welding portion 1113 and the second welding portion 1121 is improved.

The volume ratio of the first welding portion 1113 in the welding region 113 refers to a ratio of a volume of the first welding portion 1113 in the welding region 113 to a total volume of the welding region 113. The first welding portion 1113 is non-uniformly distributed in the welding region 113. Similarly, the volume ratio of the second welding portion 1121 in the welding region 113 refers to a ratio of the volume of the second welding portion 1121 in the welding region 113 to the total volume of the welding region 113. The volume ratio of the first welding portion 1113 in the welding region 113 may be 25%, 35%, 40%, 45%, 50%, etc., and the volume ratio of the second welding portion 1121 in the welding region 113 may be 35%, 55%, 60%, 65%, 70%, etc., which may be specifically determined according to a size of the welding region 113 and the materials of the pole post 111 and the electrode lead-out terminal 112, but are not limited herein.

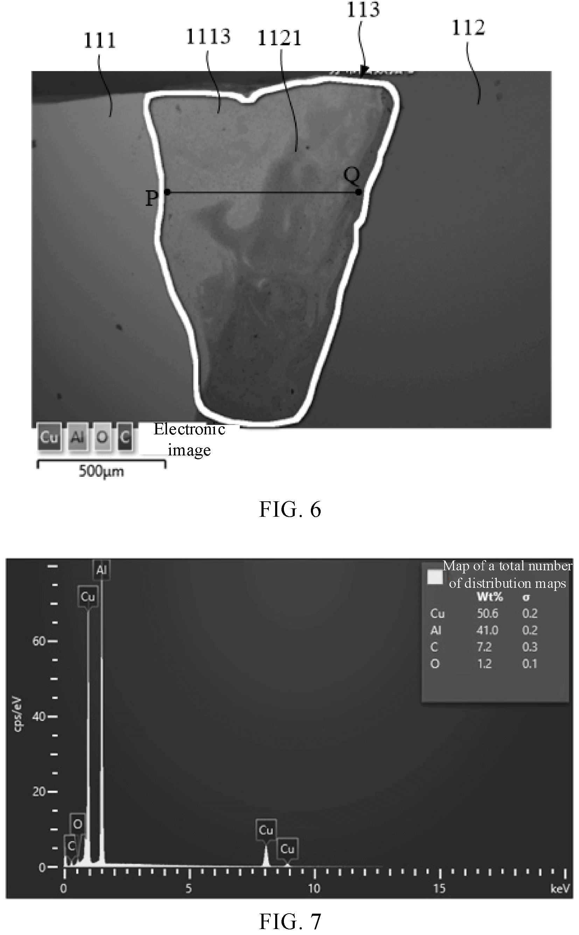

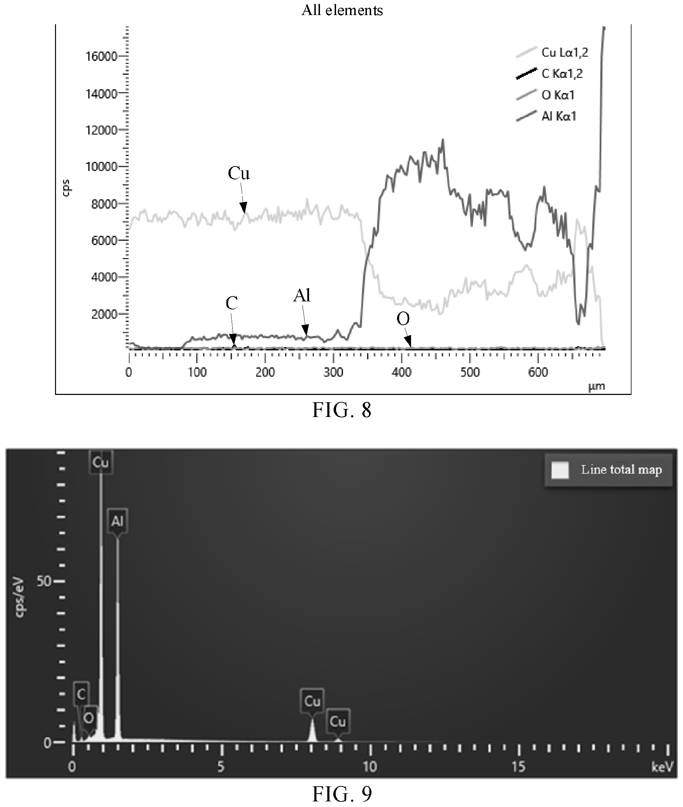

FIG. 6 is an electronic image of a cross-sectional view of an embodiment of a welding region formed by welding and fusing at a connection between an electrode lead-out terminal and a second connection end of a pole post according to the embodiments of the present disclosure. FIG. 7 is a map of a total number of distribution maps of each element in the welding region in FIG. 6. FIG. 8 is an element distribution map at each point on a line connecting point P and point Q in FIG. 6. FIG. 9 is a total map of element distribution at each point on a line connecting point P and point Q in FIG. 6. As shown in FIGs. 6 to 9, in the embodiments of the present disclosure, the first welding portion 1113 in the welding region 113 of the pole post structure 11 wraps a part of the second welding portion 1121, and the connection strength between the first welding portion 1113 and the second welding portion 1121 is relatively high. A material of the first welding portion 1113 is copper (Cu). A material of the second welding portion 1121 is aluminum (Al). In the welding region 113, a volume ratio of copper is 50.62%, a volume ratio of aluminum is 40.97%, a volume ratio of oxygen (O) is 1.22%, and a volume ratio of carbon (C) is 7.19%. On a line connecting point P and point Q, the volume ratio of copper is 60.3%, the volume ratio of aluminum is 32.75%, the volume ratio of oxygen (O) is 0.75%, and the volume ratio of carbon (C) is 63.7%.

In some embodiments, a depth H of the welding region 113 may be greater than or equal to 0.5 mm. A width W of the welding region 113 is greater than or equal to 1 mm. As such, the first welding portion 1113 and the second welding portion 1121 have sufficient volumes in the welding region 113 to ensure that the first welding portion 1113 and the second welding portion 1121 themselves have sufficient strength, and the first welding portion 1113 wraps at least a part of the second welding portion 1121. Alternatively, when the second welding portion 1121 wraps at least a part of the first welding portion 1113, the connection strength of the first welding portion 1113 and the second welding portion 1121 is improved.

The depth H of the welding region 113 may be 0.6 mm, 0.7 mm, 0.8 mm, 1 mm, etc., and the width W of the welding region 113 may be 1.1 mm, 1.2 mm, 1.3 mm, 1.5 mm, etc., which may be specifically determined according to the size and materials of the pole post 111 and the electrode lead-out terminal 112, and are not limited herein.

In some embodiments, a depth of fusion of the first welding portion 1113 may be less than a depth of fusion of the second welding portion 1121, so that during the process of forming the first welding portion 1113 and the second welding portion 1121, the structure in which the first welding portion 1113 wraps at least a part of the second welding portion 1121 and/or the structure in which the second welding portion 1121 wraps at least a part of the first welding portion 1113 can be formed.

The depth of fusion of the first welding portion 1113 may be greater than or equal to 0.3 mm, and the depth of fusion the second welding portion 1121 may be greater than or equal to 0.5 mm, so as to form the structure in which the first welding portion 1113 wraps at least a part of the second welding portion 1121 or the structure in which the second welding portion 1121 wraps at least a part of the first welding portion 1113 after solidification of the molten pool. The depth of fusion of the first welding portion 1113 may be 0.35 mm, 0.4 mm, 0.45 mm, 0.5 mm, etc., and the depth of fusion of the second welding portion 1121 may be 0.55 mm, 0.6 mm, 0.65 mm, or 0.7 mm, which may be specifically determined according to the structures of the pole post structure 111 and the electrode lead-out terminal 112.

In some embodiments, the welding region 113 may extend along a circumferential direction of the pole post 111 to extend a length of the welding region 113, thereby increasing a connection length between the pole post 111 and the electrode lead-out terminal 112. Specifically, the welding region 113 may extend along the circumferential direction of the second connection end 1112 of the pole post 111 in an annular structure.

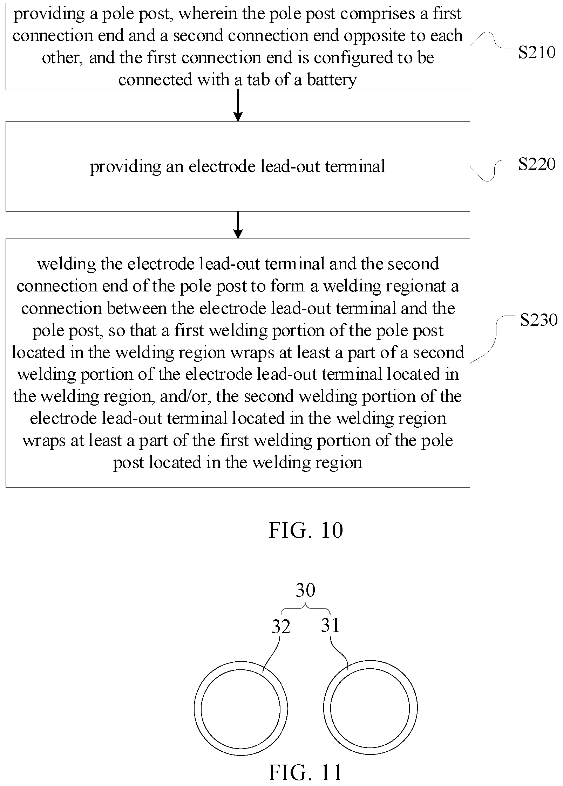

In order to better manufacture the pole post structure provided by the embodiments of the present disclosure, the embodiments of the present disclosure further provide a method for manufacturing the pole post structure. As shown in FIG. 10, the method for manufacturing the pole post structure includes steps S210 to S230, and the details are as follows.

At S210, a pole post 111 is provided, the pole post 111 includes a first connection end 1111 and a second connection end 1112 opposite to each other, and the first connection end 1111 is configured to be connected with a tab 21 of a battery 1.

A structure and material of the pole post 111 can according to each of the above-described embodiments.

At S220, an electrode lead-out terminal 112 is provided.

A structure and material of the electrode lead-out terminal 112 can according to each of the above-described embodiments.

At S230, the electrode lead-out terminal 112 is welded to the second connection end 1112 of the pole post 111 to form a welding region 113 at a connection between the electrode lead-out terminal 112 and the pole post 111, so that a first welding portion 1113 of the pole post 111 located in the welding region wraps at least a part of a second welding portion 1121 of the electrode lead-out terminal 112 located in the welding region, and/or the second welding portion 1121 of the electrode lead-out terminal 112 located in the welding region 113 wraps at least a part of the first welding portion 1113 of the pole post 111 located in the welding region 113.

In the method for manufacturing the pole post structure provided by the present disclosure, the electrode lead-out terminal 112 is welded to the second connection end 1112 of the pole post 111 to form the welding region 113 at the connection between the electrode lead-out terminal 112 and the pole post 111, so that the first welding portion 1113 of the pole post 111 located in the welding region 113 wraps at least a part of the second welding portion 1121 of the electrode lead-out terminal 112 located in the welding region 113, and/or the second welding portion 1121 of the electrode lead-out terminal 112 located in the welding region 113 wraps at least a part of the first welding portion 1113 of the pole post located in the welding region 113. As such, the connection strength between the first welding portion 1113 and the second welding portion 1121 can be improved, and the connection strength between the electrode lead-out terminal 112 and the second connection end 1112 of the pole post 111 can be improved, thereby alleviating the technical problem that the connection between the pole post 111 and the electrode lead-out terminal 112 is prone to be broken due to an insufficient connection strength between the pole post 111 and the electrode lead-out terminal 112 of the pole post structure 11.

The connection between the electrode lead-out terminal 112 and the pole post 111 is heated to form a molten pool, and the welding region 113 is formed by solidification of the molten pool, so that the first welding portion 1113 and/or the second welding portion 1121 melts and flows to form a structure in which the first welding portion 1113 wraps at least a part of the second welding portion 1121.

Specifically, the first welding portion 1113 may be heated, or heated and pressed simultaneously, so that the first welding portion 1113 and the second welding portion 1121 can be rapidly embedded, diffused, and composited with each other. After the first welding portion 1113 is heated and melted, at least a part of the second welding portion 1121 is melted at a high temperature of the first welding portion 1113, and the first welding portion 1113 and the second welding portion 1121 flow, so that the first welding portion 1113 and the second welding portion 1121 may be embedded, diffused, and composited with each other to form the welding region 113 in which the first welding portion 1113 wraps at least a part of the second welding portion 1121.

Alternatively, the second welding portion 1121 may be heated and melted, so that at least a part of the first welding portion 1113 may be melted at a high temperature of the second welding portion 1121, and the first welding portion 1113 and the second welding portion 1121 flow, so that the first welding portion 1113 and the second welding portion 1121 are embedded, diffused, and composited with each other to form the welding region 113 in which the second welding portion 1121 wraps at least a part of the first welding portion 1113.

The electrode lead-out terminal 112 can be welded to the second connection end 1112 of the pole post 111 by a laser, so that the electrode lead-out terminal 112 and the second connection end 1112 of the pole post 111 can be heated more accurately and rapidly, which is beneficial to improving the welding efficiency. Certainly, the electrode lead-out terminal 112 may be welded to the second connection end 1112 of the pole post 111 by the welding method such as submerged arc welding, explosive welding, etc., to form the welding region 113.

In some embodiments, the above-described step of welding the electrode lead-out terminal 112 and the second connection end 1112 of the pole post 111 to form the welding region 113 may include step S231 and step S232, which are described in detail as follows.

At S231: a laser welding spot 30 is formed at the connection between the second connection end 1112 and the electrode lead-out terminal 112.

As shown in FIG. 11, the laser may be emitted to the connection between the second connection end 1112 of the pole post 111 and the electrode lead-out terminal 112 by a laser device to form the laser welding spot 30 at the connection between the second connection end 1112 and the electrode lead-out terminal 112. When the laser welding spot 30 can heat the connection between the second connection end 1112 and the electrode lead-out terminal 112, the connection between the second connection end 1112 and the electrode lead-out terminal 112 is heated and melted to form a molten pool.

In some embodiments, the laser welding spot 30 may include an annular fusion spot 32 and an annular preheating spot 31. A power of the annular fusion spot 32 is greater than a power of the annular preheating spot 31. The annular preheating spot 31 and the annular fusion spot 32 are sequentially distributed along a moving direction of the laser welding spot 30. As such, the annular preheating spot 31 can preheat a region to be welded at the connection between the second connection end 1112 and the electrode lead-out terminal 112, so as to improve the efficiency of the annular fusion spot 32 fusing the connection between the second connection end 1112 and the electrode lead-out terminal 112.

At S232, the laser welding spot 30 is controlled to move along a moving trajectory 40 and swing along a swinging trajectory intersecting the moving trajectory 40, so that the electrode lead-out terminal 112 is welded to the second connection end 1112 of the pole post 111 to form the welding region 113. The moving trajectory 40 extends along a circumferential direction of the pole post 111 and is located on a surface of the electrode lead-out terminal 112 or a surface of the second connection end 1112. The swinging trajectory intersects the connection between the second connection end 1112 and the electrode lead-out terminal 112.

By controlling the laser welding spot 30 to move along the moving trajectory 40 located on the surface of the electrode lead-out terminal 112 or the surface of the second connection end 1112, and to swing along a swinging trajectory interesting the connection with the second connection end 1112 and the electrode lead-out terminal 112 in the direction intersecting the moving trajectory 40, the second connection end 1112 of the pole post 111 and the electrode lead-out terminal 112 irradiated by the welding spot can be quickly melted to form a structure in which the first welding part 1113 wraps a part of the second welding part 1121 and/or a structure in which the second welding part 1121 wraps a part of the first welding part 1113.

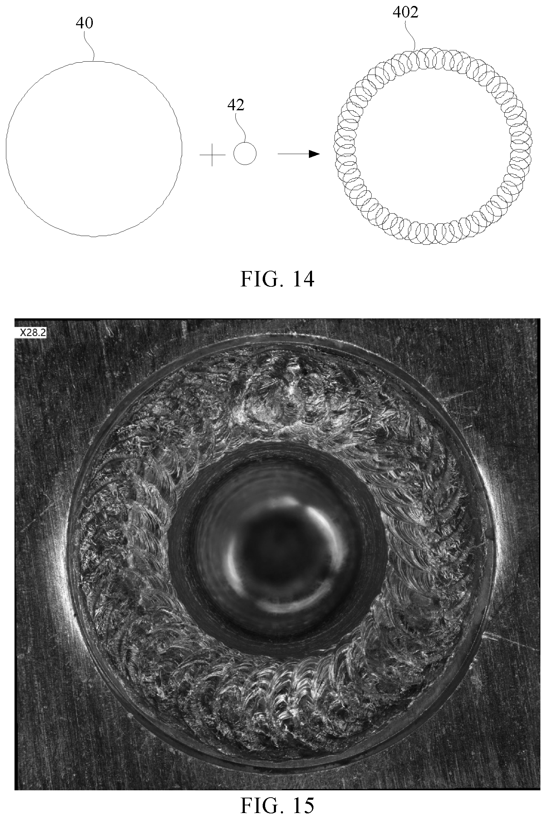

Furthermore, as shown in FIG. 15, a welding effect between the second connection end 1112 of the pole post 111 and the electrode lead-out terminal 112 can be significantly improved, so that fish scale welding with high welding quality is formed at the connection between the second connection end 1112 and the electrode lead-out terminal 112, and cracking of the molten pool is less prone to occur, and a sealant is melts in the pole post 111 due to excessive power of the laser welding spot 30. It can further prevent the power of the laser welding spot 30 from being too low, which may lead to insufficient fusion of the first welding portion 1113 and the second welding portion 1121, making it impossible to form a structure where one part wraps the other.

It should be noted that a true trajectory of the laser welding spot 30 is a composite trajectory along the moving trajectory 40 and the swinging trajectory, i.e., the laser welding spot 30 as a whole swings along the swinging trajectory while moving along the moving trajectory 40.

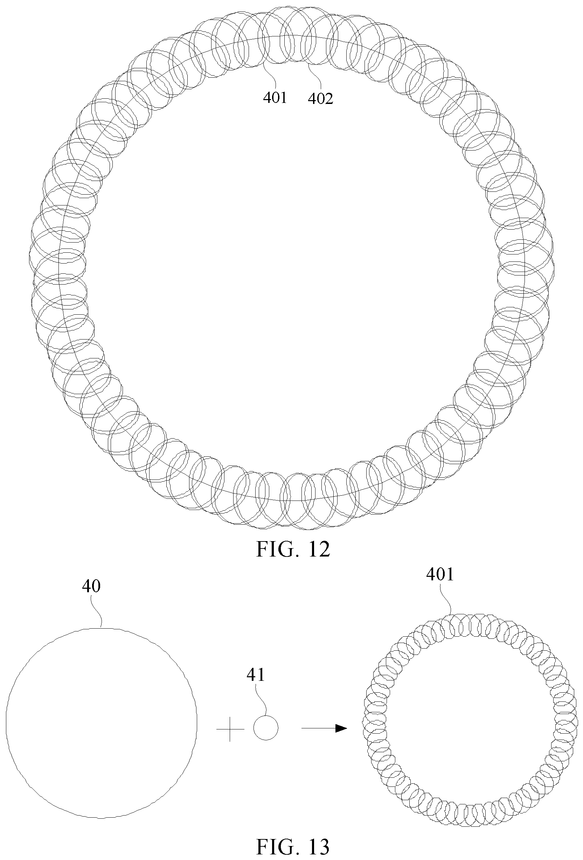

As shown in FIGs. 12 to 14, the swinging trajectory may include a first annular trajectory 42 and a second annular trajectory 43. The first annular trajectory 42 and the second annular trajectory 43 intersect at the connection between the second connection end 1112 and the electrode lead-out terminal 112. The annular preheating spot 31 swings along the first annular trajectory 42, and the annular fusion spot 32 swings along the second annular trajectory 43, so that the annular preheating spot 31 can effectively preheat a region to be melted at the connection between the second connection end 1112 and the electrode lead-out terminal 112.

That is, a true trajectory of the annular preheating spot 31 is a first spiral trajectory 401 composited along the moving trajectory 40 and the first annular trajectory 42, i.e., the annular preheating spot 31 as a whole moves along the moving trajectory 40 and swings along the first annular trajectory 42. A true trajectory of the annular fusion spot 32 is a second spiral trajectory 402 composited along the moving trajectory 40 and the second annular trajectory 43, i.e., the annular fusion spot 32 as a whole moves along the moving trajectory 40 and swings back and forth along the second annular trajectory 43.

It should be noted that a center point of the annular preheating spot 31 may be located on the moving trajectory 40 and the first swinging trajectory, and a center point of the annular fusion spot 32 may be located on the moving trajectory 40 and the second swinging trajectory, so that relative positions of the annular preheating spot 31 and the annular fusion spot 32 may be kept stable, and the preheating effect of the annular preheating spot 31 may be kept stable.

However, shapes of the first annular trajectory 42 and the second annular trajectory 43 may be circular, elliptical, etc. When the shapes of the first annular trajectory 42 and the second annular trajectory 43 are circular, a radii of the first annular trajectory 42 and the second annular trajectory 43 may be 0.5 mm, 0.6 mm, 0.7 mm, etc., which can be specifically determined according to parameters such as the size and power of the annular preheating spot 31 and the annular fusion spot 32.

A pitch of the first helical trajectory 401 and/or a pitch of the second helical trajectory 402 may be greater than or equal to 0.3 mm and less than or equal to 0.6 mm. Specifically, the pitch of the first spiral trajectory 401 and/or the pitch of the second spiral trajectory 402 may be 0.4 mm, 0.5 mm, etc., which may be specifically determined according to parameters such as the size and power of the annular preheating spot 31 and the annular fusion spot 32.

In some embodiments, a ratio of a power of the annular fusion spot 32 to a power of the annular preheating spot 31 may be greater than or equal to 110% and less than or equal to 130%, so that the annular preheating spot 31 has a better preheating effect on the region to be melted, and the annular fusion spot 32 can quickly melt the region to be melted while reducing the waste of power of the annular preheating spot 31 or the annular fusion spot 32.

In some embodiments, a speed at which the laser welding spot 30 moves along the moving trajectory 40 may be greater than or equal to 480 mm/s and less than or equal to 520 mm/s, thereby improving the welding effect of the laser welding spot 30. The speed at which the laser welding spot 30 moves along the moving trajectory 40 may be 490 mm/s, 500 mm/s, 510 mm/s, etc., which can be specifically determined according to parameters such as the power of the laser welding spot 30 and the size of the structure of the pole post 111.

A top cover assembly is further provided by the embodiments of the present disclosure. The top cover assembly includes a pole post structure. The pole post structure refers to the above-described embodiments. Since the top cover assembly adopts all the technical solutions of all the above-described embodiments, it has at least all the beneficial effects brought by the technical solutions of the above-described embodiments, and will not be repeatedly described herein.

As shown in FIG. 2, the top cover assembly 10 may include a top cover sheet 12, the pole post structure 11, and an insulating sheet 13. The top cover sheet 12 includes a mounting hole 121 penetrating through the top cover assembly 1. The pole post structure 11 may refer to the above-described embodiments, which will not be repeatedly described herein. The pole post 111 of the pole post structure 11 passes through the mounting hole 121. The top cover sheet 12 is located on one side of the electrode lead-out terminal 112 of the pole post structure 11 in a direction along the second connection end 1112 to the first connection end 1111 of the pole post 111. The insulating sheet 13 is sandwiched between the electrode lead-out terminal 112 and the top cover sheet 12.

In the top cover assembly 10 provided by the embodiments of the present disclosure, the first welding portion 1113 of the pole post structure 11 wraps at least a part of the second welding portion 1121, or the second welding portion 1121 wraps at least a part of the first welding portion 1113. As such, the connection strength between the first welding portion 1113 and the second welding portion 1121 can be improved, and the connection strength between the electrode lead-out terminal 112 and the second connection end 1112 of the pole post 111 can be improved, thereby alleviating the technical problem that the connection between the pole post 111 and the electrode lead-out terminal 112 is prone to be broken due to an insufficient connection strength between the pole post 111 and the electrode lead-out terminal 112 of the pole post structure 11. The connection stability of the tab 21 of the battery 1 and the electrode lead-out terminal 112 is improved, so that the stability of the battery 1 is improved.

The embodiments of the present disclosure further provide a battery. The battery includes a top cover assembly. A specific structure of the top cover assembly refers to the above-described embodiments. Since the battery adopts all the technical solutions of all the above-described embodiments, it has at least all the beneficial effects brought by the technical solutions of the above-described embodiments, which will not be repeatedly described herein.

As shown in FIG. 5, the battery 1 may include a cell 20. The cell 20 includes a tab 21. The tab is electrically connected to the first connection end 1111 of the pole post 111 of the pole post structure 11.

## Claims

1. A pole post structure (11), comprising:
a pole post (111), comprising a first connection end (1111) and a second connection end (1112) opposite to each other, wherein the first connection end (1111) is configured to be connected with a tab (21) of a battery (1); and
an electrode lead-out terminal (112) welded to the second connection end (1112) of the pole post (111), wherein a connection between the electrode lead-out terminal (112) and the pole post (111) is provided with a welding region (113);
wherein the pole post (111) comprises a first welding portion (1113) located in the welding region (113), the electrode lead-out terminal (112) comprises a second welding portion (1121) located in the welding region (113), the first welding portion (1113) wraps at least a part of the second welding portion (1121), and/or the second welding portion (1121) wraps at least a part of the first welding region (1113).

2. The pole post structure (11) according to claim 1, wherein the first welding portion (1113) and the second welding portion (1121) are embedded, diffused, and composited with each other, so that the first welding portion (1113) wraps at least the part of the second welding portion (1121), and/or the second welding portion (1121) wraps at least the part of the first welding region (1113).

3. The pole post structure (11) according to claim 1, wherein the connection between the electrode lead-out terminal (112) and the pole post (111) is heated to form a molten pool, and the welding region (113) is formed by solidification of the molten pool.

4. The pole post structure (11) according to claim 1, wherein the first welding portion (1113) is provided with a first connection groove (1114), and the second welding portion (1121) comprises a first embedded portion (1122) embedded into the first connection groove (1114); and/or
wherein the second welding portion (1121) is provided with a second connection groove (1125), and the first welding portion (1113) comprises a second embedded portion (1115) embedded into the second connection groove (1125).

5. The pole post structure (11) according to claim 4, wherein the first embedded portion (1122) comprises a first embedded body (1123) and a plurality of first branches (1124) protruding from the first embedded body (1123); and/or
wherein the second embedded portion (1115) comprises a second embedded body (1116) and a plurality of second branches (1117) protruding from the second embedded body (1116).

6. The pole post structure (11) according to any one of claims 1 to 5, wherein a hardness of the pole post (111) is greater than a hardness of the electrode lead-out terminal (112), and/or a density of the pole post (111) is greater than a density of the electrode lead-out terminal (112); or wherein a hardness of the pole post (111) is less than a hardness of the electrode lead-out terminal (112), and/or a density of the pole post (111) is less than a density of the electrode lead-out terminal (112).

7. The pole post structure (11) according to any one of claims 1 to 5, wherein a volume ratio of the first welding portion (1113) in the welding region (113) is greater than or equal to 20%, and a volume ratio of the second welding portion (1121) in the welding region (113) is greater than or equal to 30%.

8. The pole post structure (11) according to any one of claims 1 to 7, wherein the welding region (113) extends along a circumferential direction of the pole post (111).

9. The pole post structure (11) according to any one of claims 1 to 7, wherein a material of the pole post (111) comprises copper, and a material of the electrode lead-out terminal (112) comprises aluminum.

10. The pole post structure (11) according to any one of claims 1 to 7, wherein the pole post (111) is an integral structure, and a material of the pole post (111) is metal; and/or
wherein the electrode lead-out terminal (112) is an integral structure, and a material of the electrode lead-out terminal (112) is metal.

11. The pole post structure (11) according to any one of claims 1 to 7, wherein a depth of the welding region (113) is greater than or equal to 0.5 mm, and a width of the welding region (113) is greater than or equal to 1 mm.

12. The pole post structure (11) according to any one of claims 1 to 7, wherein a depth of fusion of the first welding portion (1113) is less than a depth of fusion of the second welding portion (1121).

13. The pole post structure (11) of claim 12, wherein the depth of fusion of the first welding portion (1113) is greater than or equal to 0.3 mm, and the depth of fusion of the second welding portion (1121) is greater than or equal to 0.5 mm.

14. A method for manufacturing a pole post structure, comprising:
providing a pole post (111), wherein the pole post (111) comprises a first connection end (1111) and a second connection end (1112) opposite to each other, and the first connection end (1111) is configured to be connected with a tab (21) of a battery (1);
providing an electrode lead-out terminal (112); and
welding the electrode lead-out terminal (112) and the second connection end (1112) of the pole post (111) to form a welding region (113) at a connection between the electrode lead-out terminal (112) and the pole post (111), so that a first welding portion (1113) of the pole post (111) located in the welding region (113) wraps at least a part of a second welding portion (1121) of the electrode lead-out terminal (112) located in the welding region (113), and/or the second welding portion (1121) of the electrode lead-out terminal (112) located in the welding region (113) wraps at least a part of the first welding portion (1121) of the pole post (111) located in the welding region (113).

15. The method for manufacturing the pole post structure according to claim 14, wherein the step of welding the electrode lead-out terminal (112) and the second connection end (1112) of the pole post (111) to form the welding region (113) comprises:
forming a laser welding spot (30) at the connection between the second connection end (1112) and the electrode lead-out terminal (112); and
controlling the laser welding spot (30) to move along a moving trajectory (40) and swing along a swinging trajectory intersecting the moving trajectory (40) simultaneously, so that the electrode lead-out terminal (112) is welded to the second connection end (1112) of the pole post (111) to form the welding region (113), wherein the moving trajectory (40) extends along a circumferential direction of the pole post (111) and is located on a surface of the electrode lead-out terminal (112) or a surface of the second connection end (1112), and the swinging trajectory intersects the connection between the second connection end (1112) and the electrode lead-out terminal (112).

16. The method for manufacturing the pole post structure according to claim 15, wherein the laser welding spot (30) comprises an annular fusion spot (32) and an annular preheating spot (31), a power of the annular fusion spot (32) is greater than a power of the annular preheating spot (31), and the annular preheating spot (31) and the annular fusion spot (32) are sequentially distributed along a moving direction of the laser welding spot (30); and
wherein the swinging trajectory comprises a first annular trajectory (42) and a second annular trajectory (43) intersecting the connection between the second connection end (1112) and the electrode lead-out terminal (112), respectively, the annular preheating spot (31) swings along the first annular trajectory (42), and the annular fusion spot (32) swings along the second annular trajectory (43).

17. The method for manufacturing the pole post structure according to claim 16, wherein a ratio of the power of the annular fusion spot (32) to the power of the annular preheating spot (31) is greater than or equal to 110% and less than or equal to 130%.

18. A top cover assembly (10), comprising:
a top cover sheet (12), comprising a mounting hole (121) penetrating through the top cover sheet (12);
the pole post structure (11) according to any one of claims 1 to 13 or the pole post structure (11) manufactured by the method for manufacturing the pole post structure according to any one of claims 14 to 17, wherein the pole post (111) of the pole post structure (11) passes through the mounting hole (121), and the top cover sheet (12) is located on one side of the electrode lead-out terminal (112) of the pole post structure (11) along a direction from the second connection end (1112) to the first connection end (1111) of the pole post structure (11); and
an insulating sheet (13) sandwiched between the electrode lead-out terminal (112) and the top cover sheet (12).

19. A battery (1), comprising the top cover assembly (10) according to claim 18.

20. The battery (1) according to claim 19, wherein the battery (1) comprises a cell (20), the cell (20) comprises a tab (21), and the tab (21) is electrically connected to the first connection end (1111) of the pole post (111) of the pole post structure (11) of the top cover assembly (10).
